# FASCICULE DE BREVET EUROPEEN

(11) **EP 0 459 927 B1**
(45) Date de publication et mention de la délivrance du brevet: **19.10.1994**
(21) Numéro de dépôt: 91460031.7
(22) Date de dépôt: 24.05.1991
(51) Int. Cl.: H04L 12/56

(54) **Méthode de mesure de la charge d'un multiplex et circuit pour sa mise en oeuvre**
Verfahren zur Messung der Belastung eines Multiplexers sowie Schaltung zur Durchführung des Verfahrens
Method of measuring the charge of a multiplexer and circuit arrangement therefor

(30) Priorité: 29.05.1990 FR 9006828
(43) Date de publication de la demande: 04.12.1991
(73) Titulaire: FRANCE TELECOM, 92131 Issy les Moulineaux (FR)
(72) Inventeur: Boyer, Pierre, F-22300 Lannion (FR); Servel, Michel, F-22300 Lannion (FR); Tranchier, Didier, F-22560 Trebeurden (FR)
(74) Mandataire: Le Guen, Louis François

(56) Documents cités:
- EP-A- 0 293 314
- EP-A- 0 310 173
- WO-A-90/00331

## Description

La présente invention concerne une méthode de mesure de charge d'un multiplex, particulièrement dans un réseau de commutation de cellules ou paquets asynchrones, et un circuit de mise en oeuvre de la méthode de l'invention.

L'acheminement de débits quelconques et le partage des mêmes ressources de tranmission constituent l'intérêt principal de la commutation temporelle asynchrone. En effet, le multiplexage temporel asynchrone permet de transmettre sur un même support, c'est-à-dire le multiplex temporel asynchrone, des cellules ou paquets appartenant à des circuits virtuels différents. Toutefois, l'allocation des ressources s'appuie généralement sur des statistiques des taux d'activité des différentes sources émettrices si bien qu'il y a un risque non nul de pertes d'informations par débordement des files d'attente dû à des surcharges instantanées. Il faut évidemment minimiser ces pertes. Une méthode décrite dans le document FR-A-2 616 024 consiste à mesurer le débit en paquets de chaque communication et, quand il est trouvé supérieur à un débit seuil maximal à déclencher une signalisation qui provoque l'élimination des paquets appartenant à la communication concernée qui sont en trop par rapport à ce débit seuil maximal, avant qu'ils ne soient pris en charge par l'organe de commutation.

D'autres méthodes de contrôle de trafic sont également connues, comme celles qui sont décrites dans l'article intitulé "The Challenge of Multipoint Communication" par Jonathan S. Turner, 5^{th} ITC Seminar, Lake Como, mai 1987, chapitre 5 - Congestion Control. Ce document définit notamment le dispositif connu sous la dénomination anglaise "leaky bucket".

Par ailleurs, dans la demande de brevet français n° 89 02073 déposée le 17/02/89 et intitulée "Procédé de réservation de débits et commutateurs - temporels de paquets asynchrones", il est proposé de n'accepter une nouvelle communication que si elle n'entraîne pas le dépassement d'un débit maximal écoulable par les commutateurs du réseau. Autrement dit, le procédé vérifie si la ressource est disponible avant de la réserver à coup sûr pour transmettre des paquets ou cellules au débit réservé. Cette phase d'activation des ressources ne peut que suivre une première phase d'établissement de la communication. Au cours de cette première phase, il convient d'examiner si l'activité des communications en cours peut permettre de prendre en compte une nouvelle communication. La mise en oeuvre de cette procédure nécessite de connaître, à chaque instant, les débits ou charges des multiplex du réseau. Il faut donc équiper chaque multiplex du réseau d'un dispositif de mesure de charge.

Un objet de l'invention consiste à prévoir une méthode de mesure de charge d'un multiplex qui soit extrêmement simple et rapide.

Un autre objet de l'invention consiste à prévoir un circuit simple destiné à mettre en oeuvre la méthode de l'invention.

Suivant une caractéristique de l'invention, il est prévu une méthode de mesure de la charge d'un multiplex asynchrone dans laquelle, à chaque cellule transmise sur le multiplex, on enregistre une valeur que l'on divise par un nombre prédéterminé, ladite valeur formant le premier opérande d'une soustraction et le résultat de la division formant le second opérande de ladite soustraction, au résultat de ladite soustraction étant ajoutée une valeur fixe prédéterminée quand ladite cellule transmise contient, dans son en-tête, un identificateur particulier et une valeur nulle dans le cas contraire, le résultat de la soustraction suivie de l'addition constituant la nouvelle valeur à enregistrer, qui représente également la mesure de charge.

Suivant une autre caractéristique, ledit identificateur identifie une cellule non vide.

Suivant une autre caractéristique, ledit nombre prédéterminé est plus petit que la valeur maximale enregistrable et ladite valeur fixe prédéterminée est inférieure audit nombre prédéterminé.

Suivant une autre caractéristique, la valeur enregistrée est une valeur binaire comportant p bits et le nombre prédéterminé est un nombre binaire comportant n bits, avec n inférieur à p, la valeur fixe prédéterminée étant égale à 2^{(p-n)}.

Suivant une autre caractéristique, un circuit de mise en oeuvre de la méthode de l'invention comprend un soustracteur, un additionneur, un registre et un diviseur, l'entrée d'horloge du registre recevant le signal d'horloge cellule du multiplex, l'entrée de signal du registre étant reliée à la sortie de l'additionneur et la sortie de signal du registre étant reliée, en parallèle, à l'entrée de premier opérande du soustracteur, à l'entrée du diviseur et à la sortie du circuit, la sortie du diviseur étant reliée à l'entrée de second opérande du soustracteur, la sortie du soustracteur étant reliée à la première entrée de l'additionneur dont la seconde entrée reçoit un signal représentatif de la valeur fixe prédéterminée quand la cellule courante du multiplex contient, dans son en-tête, l'identificateur particulier et une valeur nulle dans les autres cas, la sortie de l'additionneur étant reliée à l'entrée du registre.

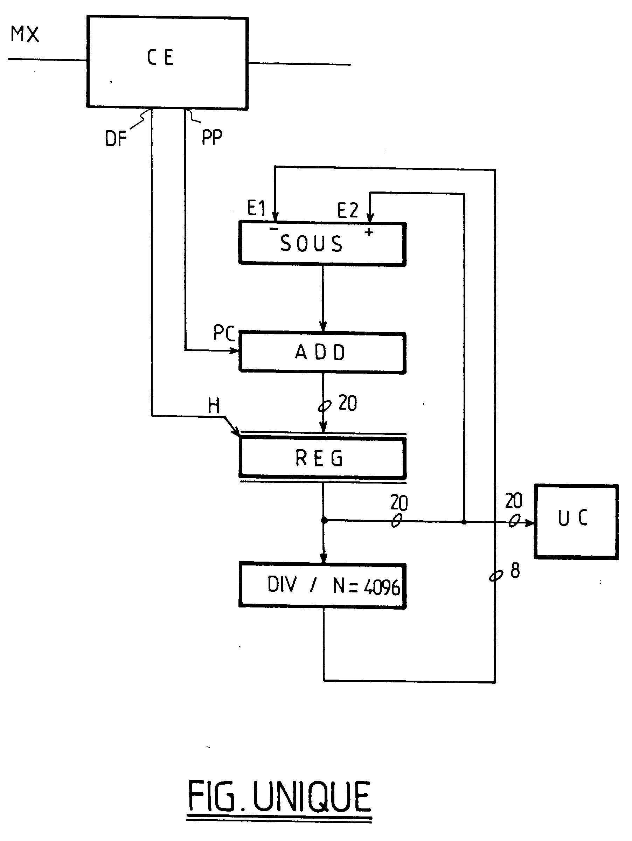

Les caractéristiques de l'invention mentionnées ci-dessus, ainsi que d'autres, apparaîtront plus clairement à la lecture d'un exemple de réalisation, ladite description étant faite en relation avec le dessin joint de la Fig. unique, qui montre un circuit de mesure de charge suivant l'invention.

Dans la Fig. unique, le circuit de mesure suivant l'invention comprend un soustracteur SOUS, un additionneur ADD, un registre REG et un diviseur-par-N DIV. Ce circuit est destiné à la mesure de la charge du multiplex MX sur lequel est monté un circuit d'alignement de multiplex de cellules CE. Un tel circuit d'alignement est décrit dans le document EP-A-113 307. On rappelle que ce circuit d'alignement délivre un signal DF de niveau "1" chaque fois qu'il détecte un octet de début de cellule et un signal PP de niveau "1" chaque fois que la cellule en cours de traitement n'est pas vide.

En se référant à nouveau au circuit de mesure, l'entrée d'horloge H du registre REG est reliée à la sortie DF du circuit d'alignement CE. L'entrée parallèle de signal du registre REG est reliée à la sortie de l'additionneur ADD et sa sortie parallèle de signal est reliée à l'entrée de signal du diviseur-par-N DIV. Dans l'exemple décrit, le registre REG est un registre à p bits et p a été choisi égal à 20.

La sortie du diviseur DIV est reliée à la sortie de mesure du circuit de mesure. Le diviseur DIV divise la valeur du contenu du registre REG par N, où N est, dans l'exemple décrit, choisi égal à 2ⁿ. Ainsi, le diviseur DIV est un simple décaleur logique droite de n bits. Plus précisément, dans l'exemple décrit, N = 4096 , ce qui correspond à n = 12. Il apparaît que p est sensiblement supérieur à n. On en décrira la raison dans la suite.

Le soustracteur SOUS effectue la soustraction de deux opérandes: E2 moins E1. Il comporte une première entrée à laquelle est appliqué l'opérande E2 et qui est reliée à la sortie parallèle de signal du registre REG, une deuxième entrée à laquelle est appliqué l'opérande E1 et qui est reliée aux (p-n) fils, soit huit fils, de poids les plus faibles du signal de sortie du registre REG. La sortie du soustracteur SOUS est reliée à la première entrée de l'additionneur ADD dont la seconde entrée est reliée à la sortie PP du circuit d'alignement CE. Ainsi, quand la sortie PP est à "1", on ajoute au résultat de la soustraction le nombre X, qui ici est égal à 2^{(n-p)}, soit 2⁸ dans l'exemple décrit, et, quand la sortie PP est à "0", le nombre "0". La sortie de l'additionneur ADD est reliée à l'entrée de signal du registre REG.

Dans la Fig. unique, on a montré la sortie du registre REG reliée à l'entrée d'un processeur UC qui permet éventuellement d'échantillonner les valeurs délivrées par le circuit de mesure de l'invention.

Au cours du fonctionnement, à chaque impulsion d'horloge H, le contenu du registre REG est transmis au diviseur DIV et à l'entrée E2, la division est faite, puis la soustraction et l'addition, puis le résultat de l'addition est enregistré dans le registre REG qui le conserve jusqu'à la prochaine impulsion d'horloge. Après un certain nombre d'impulsions H, on constate que la valeur du contenu du registre REG tend vers une valeur qui correspond à la charge du multiplex. La valeur de cette charge, rapportée à une valeur maximale égale à "1", est donnée, sous forme binaire, par la partie entière "0" suivie des vingt bits du registre REG, ces bits correspondant à la partie décimale de la charge.

En augmentant le nombre p, c'est-à-dire le nombre de bits du registre REG, on obtient une plus grande précision.

Une augmentation du nombre N (ou 2ⁿ) permet d'obtenir une durée d'intégration élevée, ce qui permet de tendre vers un taux de charge moyen. Au contraire, en réduisant le nombre N, on a une durée d'intégration plus faible, ce qui correspond à la mesure d'une charge crête. Le fait que le nombre p soit relativement grand par rapport au nombre n, permet de choisir la rapidité de convergence désirée, en modifiant d'une manière simple, la commande de décalage du diviseur DIV.

Avec p = 20 et n = 12, dans l'exemple décrit, on tend vers une durée d'intégration de l'ordre de 4000 cellules.

Si le processeur UC effectue un échantillonnage avec une période de l'ordre de la seconde, la fréquence de connaissance de la charge du multiplex facilite l'admission d'un nouvel appel et les opérations de gestion et de maintenance.

Dans l'exemple de réalisation qui vient d'être décrit, on a pris en compte dans l'additionneur ADD toutes les cellules utiles du multiplex, indépendamment de leurs appartenances à tel ou tel circuit virtuel. Toutefois, dans certains exemples d'utilisation, on peut procéder à un tri des cellules sur lesquelles la mesure de charge doit être effectuée. Ainsi, on peut, à l'entrée de l'additionneur ADD, soumettre la commande d'autorisation de prise en compte de certaines cellules à un critère particulier. Par exemple, ce critère peut être fourni par une mémoire, non montrée) d'analyse des VCI (Virtual Channel Identifier, qui se traduit par Identificateur de Circuit Virtuel), la mémoire d'analyse existant dans chaque commutateur et le critère correspondant, par exemple, à l'identificateur contenu dans l'en-tête de la cellule.

## Revendications

1. Méthode de mesure de la charge d'un multiplex particulièrement dans un réseau de commutation de cellules ou paquets asynchrones, caractérisée en ce qu'à chaque cellule transmise sur le multiplex, on enregistre une valeur que l'on divise par un nombre prédéterminé (N), ladite valeur formant le premier opérande (E2) d'une soustraction et le résultat de la division formant le second opérande (E1) de ladite soustraction, au résultat de ladite soustraction étant ajoutée une valeur fixe prédéterminée quand ladite cellule transmise contient, dans son en-tête, un identificateur particulier et une valeur nulle dans le cas contraire, le résultat de la soustraction suivie de l'addition constituant la nouvelle valeur à enregistrer, qui représente également la mesure de la charge.

2. Méthode suivant la revendication 1, caractérisée en ce que ledit identificateur identifie une cellule non vide.

3. Méthode suivant la revendication 1 ou 2, caractérisée en ce que ledit nombre prédéterminé (N) est plus petit que la valeur maximale enregistrable (2^{p}) et ladite valeur fixe prédéterminée est inférieure audit nombre prédéterminé (N).

4. Méthode suivant l'une des revendications 1 à 3, caractérisée en ce que la valeur enregistrée est un nombre binaire comportant p bits et le nombre prédéterminé (N) est un nombre binaire comportant n bits, avec n inférieur à p, la valeur fixe prédéterminée étant égale à 2^{(p-n)}.

5. Circuit de mise en oeuvre de la méthode suivant l'une des revendications 1 à 4 pour la mesure de la charge d'un multiplex particulièrement dans un réseau de commutation de cellules ou paquets asynchrones, caractérisé en ce qu'il comprend un soustracteur (SOUS) et un additionneur (ADD), un registre (REG) et un diviseur (DIV), l'entrée d'horloge (H) du registre (REG) recevant le signal d'horloge cellule du multiplex, l'entrée de signal du registre (REG) étant reliée à la sortie de l'additionneur (ADD) et la sortie de signal du registre (REG) étant reliée, en parallèle, à l'entrée de premier opérande (E2) du soustracteur (SOUS), à l'entrée du diviseur (DIV) et à la sortie dudit circuit, la sortie du diviseur (DIV) étant reliée à l'entrée de second opérande (E1) du soustracteur (SOUS), la sortie du soustracteur (SOUS) étant reliée à la première entrée de l'additionneur (ADD) dont la seconde entrée reçoit un signal représentatif de la valeur fixe prédéterminée quand la cellule courante du multiplex contient, dans son en-tête, l'identificateur particulier et une valeur nulle dans les autres cas, la sortie de l'additionneur (ADD) étant reliée à l'entrée du registre (REG).

6. Circuit suivant la revendication 5, caractérisé en ce que le signal représentatif de la valeur fixe prédéterminée est le signal indiquant que la cellule est non vide.

7. Circuit suivant la revendication 6, caractérisé en ce que l'entrée d'horloge (H) du registre (REG) est reliée à la sortie d'horloge cellule (DF) d'un circuit d'alignement (CE) monté en série sur le multiplex (MX), la seconde entrée de l'additionneur (ADD) étant reliée à la sortie (PC) de présence de cellule non vide dudit circuit d'alignement (CE).

8. Circuit suivant l'une des revendications 5 à 7, caractérisé en ce que la sortie de l'enregistrreur (REG) est reliée à une entrée d'un processeur (UC) permettant l'échantillonnage périodique de la valeur de la mesure de charge.

## Patentansprüche

1. Verfahren zur Messung der Belastung eines Multiplexers, insbesondere in einem Kommutationsnetz mit asynchronen Zellen oder Paketen, **dadurch gekennzeichnet**, daß bei jeder über den Multiplexer übertragenen Zelle ein Wert eingefügt wird, der durch eine vorbestimmte Zahl (N) geteilt wird, daß der Wert den ersten Operanden (E2) einer Subtraktion bildet und das Ergebnis der Division den zweiten Operanden (E1) der Subtraktion bildet, daß dem Ergebnis der Subtraktion ein fester vorbestimmter Wert hinzugefügt wird, wenn die übertragene Zelle in ihrem Kopfteil einen besonderen Identifikator und im gegenteiligen Fall einen Nullwert aufweist, und daß das Ergebnis der von der Addition gefolgten Subtraktion den neuen einzufügenden Wert bildet, der ebenso das Maß der Belastung darstellt.

2. Verfahren nach Anspruch 1, **dadurch gekennzeichnet**, daß der Identifikator eine nicht leere Zelle identifiziert.

3. Verfahren nach Anspruch 1 oder 2, **dadurch gekennzeichnet**, daß die vorbestimmte Zahl (N) kleiner als der maximale einzufügende Wert (2^{p}) und der vorbestimmte feste Wert kleiner ist als die vorbestimmte Zahl (N).

4. Verfahren nach einem der Ansprüche 1 - 3, **dadurch gekennzeichnet,** daß der eingefügte Wert eine binäre Zahl mit p Bit und die vorbestimmte Zahl (N) eine binäre Zahl mit n Bit ist, wobei n kleiner als p und der feste vorbestimmte Wert gleich 2^{(p-n)} ist.

5. Schaltung zur Durchführung des Verfahrens nach einem der Ansprüche 1 - 4 zum Messen der Belastung eines Multiplexers, insbesondere in einem Kommutationsnetz mit asynchronen Zellen oder Paketen, **dadurch gekennzeichnet**, daß die Schaltung einen Subtrahierer (SOUS) und einen Addierer (ADD), ein Register (REG) und einen Dividierer (DIV) enthält, daß der Takteingang (H) des Registers (REG) das Taktsignal der Zelle des Multiplexers empfängt, daß der Signaleingang des Registers (REG) mit dem Ausgang des Addierers (ADD) und der Signalausgang des Registers (REG) parallel mit dem Eingang des ersten Operanden (E2) des Subtrahierers (SOUS), mit dem Eingang des Dividierers (DIV) und mit dem Ausgang der Schaltung und der Ausgang des Dividierers (DIV) mit dem Eingang des zweiten Operanden (E1) des Subtrahierers (SOUS) und der Ausgang des Subtrahierers (SOUS) mit dem ersten Eingang des Addierers (ADD) verbunden ist, dessen zweiter Eingang ein den vorbestimmten festen Wert darstellendes Signal empfängt, wenn die laufende Zelle des Multiplexers in ihrem Kopfteil den besonderen Identifikator enthält, und in den anderen Fällen einen Nullwert, wobei der Ausgang des Addierers (ADD) mit dem Eingang des Registers (REG) verbunden ist.

6. Schaltung nach Anspruch 5, **dadurch gekennzeichnet**, daß das den verbestimmten festen Wert darstellende Signal das Signal ist, welches anzeigt, daß die Zelle nicht leer ist.

7. Schaltung nach Anspruch 6, **dadurch gekennzeichnet**, daß der Takteingang (H) des Registers (REG) mit dem Ausgang der Taktzelle (DF) einer Schaltung zum Aneinanderreihen (CE) verbunden ist, die in Reihe mit dem Multiplexer (MX) geschaltet ist, wobei der zweite Eingang des Addierers (ADD) mit dem Ausgang (PC) für die Anwesenheit der nicht leeren Zelle der Schaltung zum Aneinanderreihen (CE) verbunden ist.

8. Schaltung nach einem der Ansprüche 5 - 7, **dadurch gekennzeichnet**, daß der Ausgang des Registers (REG) mit einem Eingang eines Prozessors (UC) verbunden ist, der eine periodische Abtastung des Wertes der Belastungsmessung ermöglicht.

## Claims

1. Method of measuring the charge of a multiplex in particular in a switching network of asynchronous cells or packets, characterised in that at each transmitted cell on the multiplex a value is recorded which is divided by a predetermined number (N), the said value forming the first operand (E2) of a subtraction and the result of the division forming the second operand (E1) of the said subtraction, to the result of the said subtraction being added a predetermined fixed value when the said transmitted cell contains in its heading a particular identifier and a nul value in the contrary case, the result of the subtraction followed by the addition constituting the new value to be recorded which likewise represents the measure of the charge.

2. Method according to claim 1, characterised in that the said identifier identifies an occupied cell.

3. Method according to claim 1 or 2, characterised in that the said predetermined number (N) is smaller than the maximum recordable value (2^{p}) and the said predetermined fixed value is less than the said predetermined number (N).

4. Method according to one of the claims 1 to 3, characterised in that the recorded value is a binary number comprising bits and the predetermined number (N) is a binary number comprising n bits with n lower than p, the predetermined fixed value being equal to 2^{(p-n)}.

5. Circuit for implementing the method according to one of the claims 1 to 4 for the measuring of the charge of a multiplex in particular in a network of switching of asynchronous cells or paquets, characterised in that it comprises a subtracter (SOUS) and an adder (ADD), a register (REG) and a divider (DIV), the clock input (H) of the register (REG) receiving the cell clock signal of the multiples, the signal input of the register (REG) being equal to the output of the adder (ADD) and the signal output of the register (REG) being connected, in parallel, to the first operand input (E2) of the subtracter (SOUS), to the input of the divider (DIV) and to the output of the said circuit, the output of the divider (DIV) being equal to the second operand input (E1) of the subtracter (SOUS), the output of the subtracter (SOUS) being connected to the first input of the adder (ADD) the second input of which receives a representative signal of the predetermined fixed value when the current cell of the multiplex contains, in its heading, the particular identifier and a nul value in the other cases, the ouptut of the adder (ADD) being connected to the input of the register (REG).

6. Circuit according to claim 5, characterised in that the representative signal of the predetermined fixed value is the signal indicating that the cell is occupied.

7. Circuit according to claim 6, characterised in that the clock input (H) of the register (REG) is connected to the cell clock output (DF) of an alignment circuit (CE) mounted in series on the multiplex (MX), the second input of the adder (ADD) being connected to the presence of occupied cell output (CE) of the said alignment circuit (CE).

8. Circuit according to one of the claims 5 to 7, characterised in that the output of the register (REG) is connected to an input of a processor (UC) permitting the periodic sampling of the value of the charge measurement.
